# EUROPEAN PATENT SPECIFICATION

(11) **EP 4 185 633 B1**
(45) Date of publication and mention of the grant of the patent: **18.11.2026**
(21) Application number: 21751528.7
(22) Date of filing: 23.07.2021
(51) Int. Cl.: C08K 5/20, C08K 5/00, C08L 23/08

(54) **POLYMER COMPOSITION FOR MOULDED ARTICLE**
POLYMERZUSAMMENSETZUNG FÜR FORMARTIKEL
COMPOSITION POLYMÈRE POUR ARTICLE MOULÉ

(30) Priority: 23.07.2020 EP 20187517
(43) Date of publication of application: 31.05.2023
(73) Proprietor: Borealis GmbH, 1020 Vienna (AT)
(72) Inventor: GEBAUER, Konrad, 4021 Linz (AT); HARTL, Anna Maria, 4021 Linz (AT); WANG, Jingbo, 4021 Linz (AT); GAHLEITNER, Markus, 4021 Linz (AT); DELAVIERE, Lionel, 92400 Courbevoie (FR)
(74) Representative: Dehns
(86) International application number: PCT/EP2021/070752
(87) International publication number: WO 2022/018288

(56) References cited:
- EP-A1- 2 402 391
- EP-A1- 3 037 466
- WO-A1-2014/099350
- WO-A1-99/24503
- WO-A2-2004/072168
- US-A1- 2011 136 950

## Description

This invention relates to a polyethylene composition comprising a multimodal polyethylene polymer, a colour pigment and a nucleating agent. The invention also relates to injection moulded and compression moulded articles comprising said composition, to the use of a nucleating composition comprising nucleating agent and colour pigment to normalise or reduce the shrink anisotropy or warpage of an injection or compression moulded article and to the use of a nucleating composition to reduce angel hair, high tips and increase cycle time in cap manufacture.

### Background of Invention

Many HDPE (high density polyethylene) polymers are used to manufacture caps or closures for containers such as bottles. These caps are prepared using injection moulding or compression moulding.

Many caps are coloured for aesthetic reasons or perhaps to designate the nature of the product being packaged. Colour coded caps are frequently used to designate the type of fresh milk in a container for example.

One problem with the preparation of caps is colour dimensional stability. This problem can manifest itself simply when using a colour pigment or when changing form one colour masterbatch to another. The inventors have found that the presence of the colour pigment can cause shrinkage problems in the formed moulded article. In particular, the presence of colour pigments can increase the shrinkage of an article or exacerbate shrink anisotropy, i.e. the different in shrinkage in transverse and machine directions.

The inventors have identified that the solution to this problem lies in the nature of the nucleating agent introduced into the resin.

The use of multimodal HDPE in moulded article preparation is not new. EP-A-2052026 describes multimodal HDPE for moulded articles. EP-A-3283566 describes HDPE compositions for cap or closure manufacture comprising HDPE and a nucleating agent which is an alkali metal salt or carboxylate salt.

EP-A-3515953 describes nucleated polyethylene blends and their use in molded articles. The claimed blends contain a mixture of monomodal and bimodal HDPEs and nucleation with the likes of dibenzylidene sorbital esters.

The present invention however requires the use of a particular class of nucleating agents as defined further below. These nucleating agents are generally N,N'-disubstituted-arylenedicarboxamides. Such nucleating agents are not new and are described in EP-A-3037466 where the nucleating agent improves the optical properties of the polymer composition to which it is added. The polymer with which the nucleating agent is combined in EP-A-3037466 is not however a multimodal polymer.

JPH 06234890 describes a polyethylene resin composition comprising a polyethylene resin, a specific polycarboxylic acid amide compound and a polyamine amide compound or a polyamino acid amide compound.

In EP-A-1592738 triamide substituted compounds are compounded with any polymer such as a polyethylene. The compounds act as haze reduction agents.

WO2014/099350 describes a composition comprising HDPE, a cyclohexandicarboxylic acid metal salt and a nucleating agent for use in fibre optic cables.

The problem of colour dimensional stability (CDS) has not however, been considered before. In a first embodiment, the present invention relates to mitigating or normalising the effective of colour pigments or colour masterbatches on the shrinkage of moulded articles. The inventors have found that the addition of certain nucleating agents can reduce or normalise shrinkage.

After a moulded article has been prepared, the article undergoes a degree of shrinkage as the polymer melt cools. The industry determines the shrink in the machine direction and in the transverse direction. In general, minimising shrink is a preferred target but it is also important to ensure that shrinkage occurs evenly in both directions. The skilled artisan does not favour an article that shrinks a lot in one direction but doesn't shrink at all in the other direction. Such an article will be warped. The skilled artisan is therefore looking for shrink consistency and ideally low levels of shrinkage.

The present inventors have identified that when colour pigments or the colour masterbatch which contains said pigments is combined with the base polymer (here a multimodal polyethylene polymer) there is a significant shrink anisotropy in the final moulded article, i.e. the formed article shrinks more in one direction than another.

The present inventors sought a solution to the problem of shrink anisotropy. The present inventors also ideally want to minimise shrink of the formed article. The present inventors have found that the use of certain nucleating agents based on bis or trisamides of aromatic compounds can function to normalise anisotropy and, depending on the nature of the colour pigment, can reduce overall shrinkage.

Moreover, the inventors have found that the combination of the base polymer (here a multimodal polyethylene polymer) and certain nucleating agents based on bis or trisamides of aromatic compounds (optionally in combination with the colour pigment) reduces the presence of angel hairs and/or high tips on caps and reduces the cap cycle time. That means more caps can be prepared in a fixed period of time.

### Summary of Invention

Viewed from one aspect the invention provides a polyethylene composition comprising
a) at least 89.0 wt.% of a multimodal polyethylene polymer;
b) 0.01 to 10.0 wt.-% of a colour pigment or a colour masterbatch comprising a colour pigment;
c) 0.01 to 1.0 wt.-% of a nucleating agent of formula (IV) 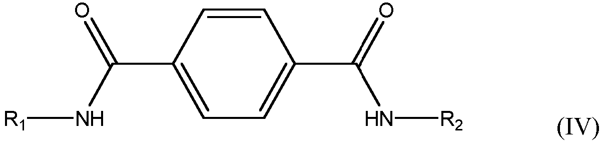
   wherein R₁ and R₂ comprise the same or different moieties chosen from C3-C12 cycloalkyl; C1-C20 alkyl; or C3-C12 cycloalkyl-C1-6-alkylene;
   or the nucleating agent N,N'-dicyclohexyl-2,6-naphthylenedicarboxamide.

Viewed from another aspect the invention provides an article comprising the polyethylene composition as hereinbefore defined, preferably an injection moulded or compression moulded article, more preferably a cap or closure.

Viewed from another aspect the invention provides the use of the nucleating composition as hereinbefore defined for reducing shrinkage anisotropy and/or warpage in an injection or compression moulded article.

Viewed from another aspect the invention provides the use of the nucleating composition as hereinbefore defined for reducing cycle time in an injection or compression moulded cap manufacturing process.

Viewed from another aspect the invention provides the use of the composition as herein defined for reducing high tips and/or angel hair in an injection or compression moulded cap.

### Detailed Description of Invention

The present invention relates to a composition for the preparation of moulded articles such as caps and closures. In particular, the invention relates to a polyethylene composition comprising
a) at least 89.0 wt.% of a multimodal polyethylene polymer;
b) 0.01 to 10.0 wt.-% of a colour pigment or a colour masterbatch comprising a colour pigment;
c) 0.01 to 1.0 wt.-% of a nucleating agent of formula (IV) 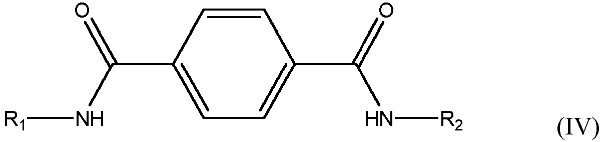
   wherein R₁ and R₂ comprise the same or different moieties chosen from C3-C12 cycloalkyl; C1-C20 alkyl; or C3-C12 cycloalkyl-C1-6-alkylene;
   or the nucleating agent N,N'-dicyclohexyl-2,6-naphthylenedicarboxamide.

### Multimodal Polyethylene Polymer

The polyethylene composition comprises a multimodal polyethylene polymer which is preferably an HDPE (high density polyethylene), especially a high density polyethylene copolymer. The multimodal high density ethylene copolymer preferably contains a comonomer therefore. The majority by mole of monomer residues present are however derived from ethylene monomer units.

Any multimodal polyethylene polymer preferably comprises:
(I) a lower molecular weight ethylene homopolymer or copolymer component; and
(II) a higher molecular weight (HMW) ethylene copolymer component of ethylene and at least one C3-12 alpha olefin comonomer.

The comonomer content in the HMW component preferably is up to 10% by mol, more preferably up to 5% by mol. Ideally, however there are very low levels of comonomer present in any copolymer fraction such as 0.1 to 3.0 mol%, e.g. 0.5 to 2.0 mol%.

The overall comonomer content in the multimodal polyethylene copolymer as a whole may be 0.05 to 3.0 mol % e.g. 0.1 to 2.0 mol%, preferably 0.2 to 1.0 mol%.

The copolymerisable monomer or monomers present in any copolymer component are C3-12 alpha olefin comonomers, particularly singly or multiply ethylenically unsaturated comonomers, in particular C4-12-alpha olefins, such as propene, but-1-ene, hex-1-ene, oct-1-ene, and 4-methyl-pent-1-ene. The use of 1-hexene and 1-butene is particularly preferred. Ideally there is only one comonomer present but it is also possible for there to be two or more comonomers thus forming a terpolymer.

When one comonomer is present that comonomer is ideally 1-butene. Where two or more comonomers are present they are preferably 1-butene and 1-hexene.

The multimodal polyethylene polymer is multimodal and therefore comprises at least two components. It is generally preferred if the higher molecular weight (HMW) component has an Mw of at least 5000 more than the lower molecular weight (LMW) component, such as at least 10,000 more. Alternatively viewed, the MFR₂ of the HMW component is lower than the MFR₂ of the LMW component, e.g. by at least 2 g/10 min.

The multimodal polyethylene polymer is multimodal. Usually, a polyethylene composition comprising at least two polyethylene fractions, which have been produced under different polymerisation conditions resulting in different (weight average) molecular weights and molecular weight distributions for the fractions, is referred to as "multimodal". Accordingly, in this sense the compositions of the invention are multimodal polyethylenes. The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

It is preferred if the multimodal polyethylene polymer is bimodal.

The multimodal polyethylene polymer preferably has an MFR₂ of 0.5 to 20 g/10min, preferably 2.0 to 10.0 g/10 min, preferably 2.0 to 5.0 g/10min. The polymer preferably has an MFR₂ of 2.0 to 4.9 g/10 min. Most preferably, the MFR₂ may be of 2.5 to 4.9 g/10 min, preferably 3.0 to 4.9 g/10min. In some embodiments, the MFR₂ may be of 0.1 to 10.0 g/10 min, preferably 0.5 to 4.9 g/10min.

The multimodal polyethylene polymer preferably has an MFR₅ of 11.0 to 18.0 g/10 min., preferably 12-16 g/10 min.

The density of the multimodal polyethylene polymer is preferably at least 0.940 g/cm³, such as 0.940 - 0.980 g/cm³, preferably in the range of 0.945 - 0.970 g/cm³, more preferably in the range of 0.950 - 0.960 g/cm³.

The multimodal polyethylene polymer preferably has a molecular weight distribution Mw/Mn, being the ratio of the weight average molecular weight Mw and the number average molecular weight Mn, of 5 - 50, preferably in the range of 10 - 30, more preferably 10.5 to 18.0.

The multimodal polyethylene polymer preferably has an Mw/Mn of 30.0 or below, more preferably of 25.0 or below, even more preferably of 20.0 or below.

The weight average molecular weight Mw of the multimodal polyethylene polymer preferably is at least 50,000, more preferably at least 70,000. Furthermore, the Mw of the composition preferably is at most 200,000, more preferably at most 150,000.

As noted above, the multimodal polyethylene polymer preferably comprise a lower molecular weight component (I) and a higher molecular weight component (II). The weight ratio of LMW fraction (I) to HMW fraction (II) in the multimodal polyethylene polymer is preferably in the range 35:65 to 55:45, more preferably 40:60 to 55:45, most preferably 48:52 to 52:48. It has been found therefore that the best results are obtained when the HMW component is present at around the same percentage as the LMW component or even predominates, e.g. 48 to 52 wt% of the HMW component (II) and 52 to 48 wt% fraction (I).

An ideal polymer is therefore a lower molecular weight homopolymer component (I) with a higher molecular weight component (II) which is an ethylene 1-butene component.

The lower molecular weight fraction (I) preferably has an MFR₂ of 200 to 400 g/10min g/10min. A range of 250 to 350 g/10min is preferred. This high MFR₂ in the LMW fraction ensures that there is a large difference in Mw between LMW and HMW components and is important in giving the multimodal polyethylene polymer good rheological properties and ideal flow as well as good ESCR.

Fraction (I) is preferably an ethylene homopolymer with a preferred density of 965 to 975 kg/m³, preferably 968 to 972 kg/m³.

The HMW component is preferably an ethylene copolymer. Its properties are chosen such that the desired final density and MFR are achieved. It has a lower MFR₂ than the LMW component and a lower density. Ideally it is a copolymer of ethylene and 1-butene.

A multimodal (e.g. bimodal) polyethylene polymer as hereinbefore described may be produced by mechanical blending two or more polyethylenes (e.g. monomodal polyethylenes) having differently centred maxima in their molecular weight distributions. The monomodal polyethylenes required for blending may be available commercially or may be prepared using any conventional procedure known to the skilled man in the art. Each of the polyethylenes used in a blend and/or the final polymer composition may have the properties hereinbefore described for the lower molecular weight component, and higher molecular weight component of the composition, respectively.

However, it is preferred if the multimodal polyethylene polymer is formed in a multistage process. The process of the invention preferably involves polymerising ethylene so as to form a lower molecular weight homopolymer component (I) as herein defined; and subsequently

polymerising ethylene and at least one C3-12 alpha olefin comonomer in the presence of component (I) so as to form a higher molecular weight component (II) and hence to form the desired multimodal polyethylene copolymer of the invention.

Any catalyst can be used to prepare the multimodal polyethylene polymer of the invention including single site (e.g. metallocene) catalysts and Ziegler Natta catalysts. It is preferred if the same Ziegler Natta catalyst is used in both stages of the process and is transferred from step (I) to step (II) along with component (I).

It is preferred if at least one component is produced in a gas-phase reaction.

Further preferred, one of the fractions (I) and (II) of the multimodal polyethylene polymer, preferably fraction (I), is produced in a slurry reaction, preferably in a loop reactor, and one of the fractions (I) and (II), preferably fraction (II), is produced in a gas-phase reaction.

Preferably, the multimodal polyethylene polymer may be produced by polymerisation using conditions which create a multimodal (e.g. bimodal) polymer product using a Ziegler Natta catalyst system using a two or more stage, i.e. multistage, polymerisation process with different process conditions in the different stages or zones (e.g. different temperatures, pressures, polymerisation media, hydrogen partial pressures, etc).

Polymer compositions produced in a multistage process are also designated as "in-situ" blends.

Preferably, the main polymerisation stages of the multistage process for producing the composition according to the invention are such as described in EP 517 868, i.e. the production of fractions (I) and (II) is carried out as a combination of slurry polymerisation for fraction (I)/gas-phase polymerisation for fraction (II). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 10 % by weight, preferably 1 to 5 % by weight, more preferably 1 to 3 % by weight, of the total composition is produced. The prepolymer is preferably an ethylene homopolymer (High Density PE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end. Any prepolymer is considered a part of the LMW component herein.

The polymerisation catalyst is preferably a Ziegler-Natta (ZN) catalyst. The catalyst may be supported, e.g. with conventional supports including magnesium dichloride based supports or silica. Preferably the catalyst is a ZN catalyst, more preferably the catalyst is silica supported ZN catalyst.

In general, the multimodal polyethylene polymer used herein is a commercial product and can be purchased from suppliers such as Borealis.

### Colour Pigment

The polyethylene composition of the invention also comprises a colour pigment which may be contained in a colour masterbatch. The term colour masterbatch describes a colouring composition comprising a carrier and one or more colour pigments. The nature of these masterbatches is often proprietary but it is believed that the colour pigment content in such masterbatches is between 10 and 50 wt%, such as 10 to 30 wt%.

The nature of the carrier present in such a masterbatch is not important and it is typically a polymer such as a polyolefin.

The nature of the colour pigment and the amount therefore varies depending on the colour pigment. In one embodiment the colour pigment is organic, in particular an organic macrocyclic compound. In another embodiment the colour pigment is inorganic. Mixtures of colour pigments may also be used, e.g. an inorganic pigment and a macrocyclic organic pigment.

Organic colouring pigments are often macrocyclic such as phthalocyanines. The use of copper phthalocyanine or a derivative thereof is a preferred option. This makes blue articles.

Inorganic colourants of interest include ultramarine blue (e.g. CAS No. 57455-37-5) or titanium dioxide.

It is especially preferred if the composition of the invention comprises a macrocyclic organic pigment, more especially a macrocyclic organic pigment and an inorganic pigment. Where one or both of these pigments are present, the nucleating agent defined herein reduces shrink anisotropy.

The colour imparted to the article can vary. Preferably the colour is not white or black.

### Nucleating agent

The nucleating agent is of formula IV: 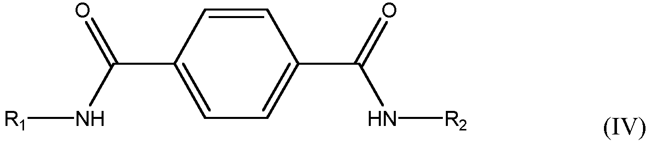 d) wherein R₁ and R₂ comprise the same or different moieties chosen from C3-C12 cycloalkyl; C1-C20 alkyl; or C3-C12 cycloalkyl-C1-6-alkylene- or the nucleating agent is N,N'-dicyclohexyl-2,6-naphthylenedicarboxamide.

Still more preferably, the nucleating agent is of formula V wherein the nucleating agent comprises a structure of formula (V): 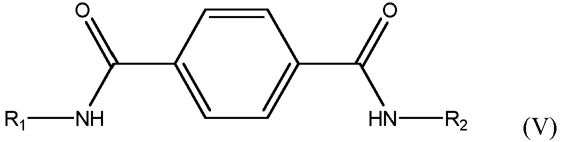 wherein R₁ and R₂ comprise the same moieties chosen from C5-C8 cycloalkyl; C1-C6 alkyl; or C5-C8-cycloalkyl-C1-6-alkylene-.

It is most preferred if R₁ to R₂ are cyclohexyl.

Highly preferred nucleating agent are N,N'-dicyclohexyl-2,6-naphthylenedicarboxamide and N,N'-dicyclohexyl-1,4-phenylenedicarboxamide.

### Amounts

The multimodal polyethylene polymer preferably forms at least 90.0 wt% of the composition such as at least 92.0 wt% of the composition. Most preferably it forms at least 94.0 wt% of the composition such as 94.0 to 99.5 wt%. The multimodal polyethylene polymer can generally form the balance of the composition once all other components are taken into account.

The colour pigment or colour masterbatch comprising a colour pigment preferably forms 0.05 to 5.0 wt.-% of the composition, such as 0.1 to 3.0 wt%.

In one embodiment, the composition comprises 0.1 to 5.0 wt.-% of the colour pigment or colour masterbatch comprising a colour pigment, such as 0.1 to 4.0 wt% of the colour pigment or colour masterbatch comprising a colour pigment.

The nucleating preferably forms 0.01 to 1.0 wt.% of said composition, preferably 0.05 to 0.5 wt%, especially 0.05 to 0.25 wt%.

In a further aspect therefore, the invention relates to a polyethylene composition comprising
a) at least 89.0 wt.% of a multimodal polyethylene polymer;
b) 0.1 to 10.0 wt.-% of a colour masterbatch comprising a colour pigment, preferably 0.5 to 5.0 wt%;
c) 0.01 to 1.0 wt.-% of a nucleating agent of formula (IV).

The polyethylene composition of the invention may comprise
a) at least 94.0 wt.% of a multimodal polyethylene polymer;
b) 0.05 to 5.0 wt.-% of a colour pigment or a colour masterbatch comprising a colour pigment;
c) 0.01 to 1.0 wt.-% of said nucleating agent of formula (IV).

Any composition of the invention may consist of the listed components.

In the production of the composition of the present invention, preferably a compounding step is applied, wherein the composition of the invention is extruded in an extruder and then pelletised to polymer pellets in a manner known in the art.

The polyethylene composition, e.g. in pellet form, may also contain minor quantities of other additives such as antistatic agents, fillers, antioxidants, etc., generally in amounts of up to 5 % by weight.

Optionally, additives or other polymer components can be added to the composition during the compounding step in the amount as described above. Preferably, the composition of the invention obtained from the reactor is compounded in the extruder together with additives in a manner known in the art.

The multimodal polyethylene polymer may also be combined with other polymer components such as other HDPEs or with other polymers such as LLDPE or LDPE.

However, articles of the invention such as caps and closures are preferably at least 89.0 wt% of the multimodal polyethylene polymer.

### Applications

Still further, the present invention relates to an injection or compression moulded article, preferably a cap or closure, comprising a polyethylene composition as described above and to the use of such a polyethylene composition for the production of an injection or compression moulded article, preferably a cap or closure. Preferably, injection moulded articles are made. The invention is ideally suited to the manufacture of caps for containers such as bottles.

The caps are therefore ideal for bottles containing carbonated or non-carbonated drinks.

Injection moulding of the composition hereinbefore described may be carried out using any conventional injection moulding equipment. A typical injection moulding process may be carried out a temperature of 190 to 275°C.

Still further, the present invention relates to a compression moulded article, preferably a caps or closure article, comprising a polyethylene polymer as described above and to the use of such a polyethylene polymer for the production of a compression moulded article, preferably a cap or closure.

Preferably, the composition of the invention is used for the production of a cap or closure.

The caps and closures of the invention are of conventional size, designed therefore for bottles and the like. They are approximately 2 to 8 cm in outer diameter (measured across the solid top of the cap) depending on the bottle and provided with a screw. Cap height might be 0.8 to 3 cm.

Caps and closure may be provided with tear strips from which the cap detaches on first opening as is well known in the art. Caps may also be provided with liners.

It will be appreciated that any parameter mentioned above is measured according to the detailed test given below. In any parameter where a narrower and broader embodiment are disclosed, those embodiments are disclosed in connection with the narrower and broader embodiments of other parameters.

The invention will now be described with reference to the following non limiting examples and figures.

### Brief Description of the Figures

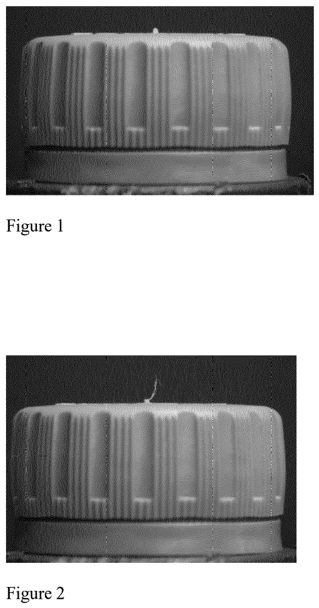

Figure 1 shows a cap free of high tip (IE3). Figure 2 shows the presence of a high tip (CE5).

### Test Methods:

### Melt Flow Rate

The melt flow rate (MFR) is determined according to ISO 1133 and is indicated in g/10 min. The MFR is an indication of the melt viscosity of the polymer. The MFR is determined at 190°C. The load under which the melt flow rate is determined is usually indicated as a subscript, for instance MFR₂ is measured under 2.16 kg load (condition D), MFR₅ is measured under 5 kg load (condition T) or MFR₂₁ is measured under 21.6 kg load (condition G).

The quantity FRR (flow rate ratio) is an indication of molecular weight distribution and denotes the ratio of flow rates at different loads. Thus, FRR_{21/2} denotes the value of MFR₂₁/MFR₂.

### Density

Density of the polymer was measured according to ISO 1183 / 1872-2B.

For the purpose of this invention the density of the blend can be calculated from the densities of the components according to: ${ρ}_{b} = {\sum }_{i} {w}_{i} ⋅ {ρ}_{i}$ where ρ_{b} is the density of the blend,
wᵢ is the weight fraction of component "i" in the blend and
ρᵢ is the density of the component "i".

### Molecular weight

### Molecular weight averages, molecular weight distribution (Mn, Mw, Mz, MWD)

Molecular weight averages (Mz, Mw and Mn), Molecular weight distribution (MWD) and its broadness, described by Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas: ${M}_{n} = \frac{{\sum }_{i = 1}^{N} {A}_{i}}{{\sum }_{i = 1}^{N} \left({A}_{i}/{M}_{i}\right)}$ (1) ${M}_{w} = \frac{{\sum }_{i = 1}^{N} \left({A}_{i}x {M}_{i}\right)}{{\sum }_{i = 1}^{N} {A}_{i}}$ (2) ${M}_{z} = \frac{{\sum }_{i = 1}^{N} \left({A}_{i} x {M}_{i}^{2}\right)}{{\sum }_{i = 1}^{N} \left({A}_{i}/{M}_{i}\right)}$ (3) For a constant elution volume interval ΔVᵢ, where Aᵢ, and Mᵢ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants: ${K}_{PS} = 19 x {10}^{- 3} mL / g , {α}_{PS} = 0.655$ ${K}_{PE} = 39 x {10}^{- 3} mL / g , {α}_{PE} = 0.725$ ${K}_{PP} = 19 x {10}^{- 3} mL / g , {α}_{PP} = 0.725$ A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

### Quantification of microstructure by NMR spectroscopy

Quantitative nuclear-magnetic resonance (NMR) spectroscopy was used to quantify the comonomer content of the polymers.

Quantitative ¹³C{¹H} NMR spectra recorded in the molten-state using a Bruker Advance III 500 NMR spectrometer operating at 500.13 and 125.76 MHz for ¹H and ¹³C respectively. All spectra were recorded using a ¹³C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. Standard single-pulse excitation was employed utilising the transient NOE at short recycle delays of 3s (cf Klimke, K., Parkinson, M., Piel, C., Kaminsky, W., Spiess, H.W., Wilhelm, M., Macromol. Chem. Phys. 2006;207:382. as well as Pollard, M., Klimke, K., Graf, R., Spiess, H.W., Wilhelm, M., Sperber, O., Piel, C., Kaminsky, W., Macromolecules 2004;37:813), and the RS-HEPT decoupling scheme (cf Filip, X., Tripon, C., Filip, C., J. Mag. Resn. 2005, 176, 239 and Griffin, J.M., Tripon, C., Samoson, A., Filip, C., and Brown, S.P., Mag. Res. in Chem. 2007 45, S1, S198).

A total of 1024 (1k) transients were acquired per spectrum. This setup was chosen due its high sensitivity towards low comonomer contents.

Quantitative ¹³C{¹H} NMR spectra were processed, integrated and quantitative properties determined using custom spectral analysis automation programs. All chemical shifts are internally referenced to the bulk methylene signal (δ+) at 30.00 ppm (cf J. Randall, Macromol. Sci., Rev. Macromol. Chem. Phys. 1989, C29, 201.)

Characteristic signals corresponding to the incorporation of 1-butene were observed (randall89) and all contents calculated with respect to all other monomers present in the polymer.

Characteristic signals resulting from isolated 1-butene incorporation i.e. EEBEE comonomer sequences, were observed. Isolated 1-butene incorporation was quantified using the integral of the signal at 39.84 ppm assigned to the *B2 sites, accounting for the number of reporting sites per comonomer: $B = {I}_{∗ B 2}$

With no other signals indicative of other comonomer sequences, i.e. consecutive comonomer incorporation, observed the total 1-butene comonomer content was calculated based solely on the amount of isolated 1-butene sequences: ${B}_{total} = B$

The relative content of ethylene was quantified using the integral of the bulk methylene (δ+) signals at 30.00 ppm: $E = \left(1/2\right) * {I}_{δ +}$

The total ethylene comonomer content was calculated based the bulk methylene signals and accounting for ethylene units present in other observed comonomer sequences or end-groups: ${E}_{total} = E + \left(5/2\right) * B$

The total mole fraction of 1-butene in the polymer was then calculated as: $fB = \left({B}_{total}/\left({E}_{total}+{B}_{total}\right)\right.$

The total comonomer incorporation of 1-butene in mole percent was calculated from the mole fraction in the usual manner: $B \left[mol%\right] = 100 * fB$

The total comonomer incorporation of 1-butene in weight percent was calculated from the mole fraction in the standard manner: 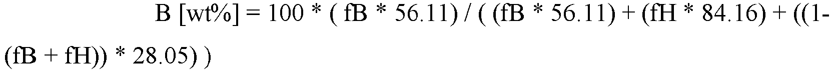 B [wt%] = 100 * ( fB * 56.11)/( (fB * 56.11) + (fH * 84.16) + ((1-(fB + fH)) * 28.05) )

### Example 1

The injection moulding experiments were performed at Montanuniversität Leoben, Institute for Polymer Processing, with a fully electric machine Arburg Allrounder 470A 1000-400 with a screw diameter of 25 mm and a maximal clamp force of 1000 kN. In order to obtain similar molding conditions to the caps, a part with a similar wall thickness and a simple geometry for easy dimensional measurements was required. For that purpose an existing mold of the Institute of Polymer Processing was used. It is a flat plate with the dimensions 75 x 25 x 1.1 mm³ (length x width x thickness). The following materials are employed:
MB7541 is a multimodal HDPE of density 954 kg/m³ and MFR₂ of 4 g/10min.

MB5568 is a multimodal HDPE of density 956 kg/m³ and MFR₂ of 0.8 g/10min.

FLYADD-B1 (CAS 15088-29-6), also known as TMB-5, is a soluble nucleating agent. It is N,N'-dicyclohexyl-1,4-phenylenedicarboxamide.

CMB1 (Remafin Blue PE53421301ZN) is a blue colour masterbatch. The blue pigments in this masterbatch were identified as ultramarine blue (PB29).

CMB2 (Remafin Blue PL14502310916) is a blue colour masterbatch. The blue pigments in this masterbatch were identified as ultramarine blue (PB29) and phthalocyanine blue (PB15).

| | Unit | CE1 | CE2 | CE3 | IE1 | IE2 |
|---|---|---|---|---|---|---|
| MB7541 | w% | 100 | 98 | 98,5 | 97,9 | 98,4 |
| CMB1 | w% | | 2 | | 2 | |
| CMB2 | w% | | | 1,5 | | 1,5 |
| FLYADD-B1 | w% | | | | 0,1 | 0,1 |
| shrinkage MD | % | 2,40 | 2,07 | 2,41 | 2,87 | 2,67 |
| std. dev. MD | % | 0,01 | 0,02 | 0,02 | 0,02 | 0,02 |
| shrinkage TD | % | 1,27 | 1,23 | 0,56 | 0,77 | 0,74 |
| std. dev. TD | % | 0,01 | 0,05 | 0,03 | 0,02 | 0,02 |
| **anisotropy factor** | | **1,89** | **1,68** | **4,30** | **3,73** | **3,61** |

The shrinkage of injection moulded plate specimens was measured in in-flow (MD = machine direction) and cross-flow direction (TD = transversal direction) and an anisotropy factor was calculated (anisotropy factor = shrinkage MD/shrinkage TD).

The multimodal polyethylene polymer alone shows a low shrink anisotropy (CE1). When the CMB is added however there are different effects. The presence of the CMB1 containing only the inorganic colour pigment shows a slightly reduced anisotropy whereas the presence of CMB2 containing both inorganic and organic pigments has a markedly increased anisotropy.

When the FLYADD-B1 is added, the resulting anisotropy is normalised to a consistent value. Irrespective of whether CMB1 or CMB2 is used, the resulting anisotropy is predictable. Having a predictable and hence normalised shrinkage is valuable for the worker in this field. Moreover, the presence of the nucleating agent appears to reduce the anisotropy in compositions containing the organic pigment.

### Example 2

### Cycle time reduction for Injection Moulding of caps with blue MB5568 in the presence of FLYADD-B1

### Equipment

The trials were conducted on the injection-moulding machine "Engel Speed 180/45" with a 12-cavitiy mould for caps (28mm PCO1881, carbonated soft drinks, for HDPE).

### Materials

MB5568 was used as a base resin. The blue colour masterbatch (CMB) is CMB2. A compound of MB5568 and FLYADD-B1 was prepared with a twin-screw extruder. The blue compounds were prepared by dry blending of the base resin and the blue CMB prior to injection moulding.

### Results

| | unit | CE4 | IE3 | CE5 | IE4 |
|---|---|---|---|---|---|
| MB5568 | w% | 100 | 99,9 | 98,5 | 98,4 |
| CMB2 | w% | | | 1,5 | 1,5 |
| FLYADD-B1 | w% | | 0,1 | | 0,1 |
| cycle time @ 200 °C | s | 3,7 | 3,59 | n.d. | n.d. |
| cycle time @ 220 °C | s | 3,86 | 3,56 | 4,44 | 3,93 |
| cycle time @ 240 °C | s | 3,65 | 3,43 | 4,51 | 4,12 |

Significant cycle time reductions could be achieved in the presence of FLYADD-B1 for the natural as well as the blue compound at different melt temperatures (200, 220, 240 °C). An increased number of defects (high tips and angel hair) was not observed for the nucleated compounds compared to the non-nucleated materials. Figure 1 shows a cap free of high tip (IE3). Figure 2 shows the presence of a high tip (CE5).

## Claims

1. Polyethylene composition comprising
a) at least 89.0 wt.% of a multimodal polyethylene polymer;
b) 0.01 to 10.0 wt.-% of a colour pigment or a colour masterbatch comprising a colour pigment;
c) 0.01 to 1.0 wt.-% of a nucleating agent of formula (IV) 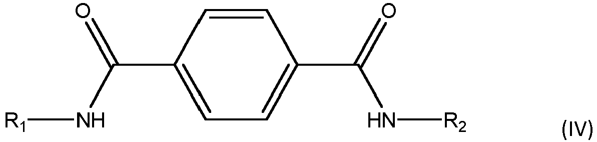
wherein R₁ and R₂ comprise the same or different moieties chosen from C3-C12 cycloalkyl; C1-C20 alkyl; or C3-C12 cycloalkyl-C1-6-alkylene;
or the nucleating agent N,N'-dicyclohexyl-2,6-naphthylenedicarboxamide.

2. The polyethylene composition according to claim 1 wherein R₁ and R₂ are both cyclohexyl.

3. The polyethylene composition according to any of the preceding claims wherein said multimodal polyethylene polymer has a density according to ISO 1183 in the range of 0.940 - 0.980 g/cm³, preferably in the range of 0.945 - 0.970 g/cm³, more preferably in the range of 0.950 - 0.960 g/cm³.

4. The polyethylene composition according to any of the preceding claims wherein said multimodal polyethylene polymer has an MFR_{190/2.16} according to ISO1133 in the range of 0.05 to 20 g/10 min.

5. The polyethylene composition according to any of the preceding claims, wherein the colour pigment comprises a macrocyclic organic pigment or one or more inorganic pigments or a mixture thereof, preferably a blend of ultramarine blue and a phthalocyanine.

6. The polyethylene composition according to claim 5 wherein said macrocyclic organic pigment comprises a phthalocyanine (Pc) or a derivative thereof, preferably copper phthalocyanine and/or a derivative thereof.

7. The polyethylene composition according to claim 5 wherein the inorganic pigment is selected from Ultramarine Blue or titanium dioxide or a combination thereof.

8. The polyethylene composition according to any of the preceding claims wherein the polyethylene polymer is bimodal and/or wherein the polyethylene polymer has a molecular weight distribution Mw/Mn in the range of 5 - 50, preferably in the range of 10 - 30 as measured by GPC.

9. The polyethylene composition according to any of the preceding claims comprising
a) at least 94.0 wt.% of a multimodal polyethylene polymer;
b) 0.05 to 5.0 wt.-% of a colour pigment or a colour masterbatch comprising a colour pigment;
c) 0.01 to 1.0 wt.-% of said nucleating agent.

10. Use of the composition as defined in claim 1 for reducing shrinkage anisotropy and/or warpage in an injection or compression moulded article.

11. Article comprising the polyethylene composition according to claim 1 to 9, preferably an injection moulded or compression moulded article, more preferably a cap or closure.

12. Use of the composition as defined in claim 1 for reducing high tips and/or angel hair in an injection or compression moulded cap.

13. Use of the composition as defined in claim 1 for reducing cycle time in an injection or compression moulded cap manufacturing process.

## Patentansprüche

1. Polyethylen-Zusammensetzung umfassend
a) mindestens 89,0 Gew.-% eines multimodalen Polyethylenpolymers;
b) 0,01 bis 10,0 Gew.-% eines Farbpigments oder eines Farbmasterbatchs, das ein Farbpigment umfasst;
c) 0,01 bis 1,0 Gew.-% eines Keimbildners der Formel (IV) 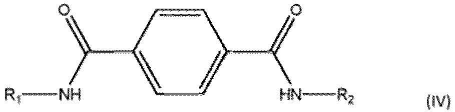
wobei R₁ und R₂ dieselben oder verschiedene aus C3-C12-Cycloalkyl; C1-C20-Alkyl; oder C3-C12-Cycloalkyl-C1-6-alkylen ausgewählte Gruppen umfassen;
oder den Keimbildner N,N'-dicyclohexyl-2,6-naphthylindicarboxamid.

2. Polyethylen-Zusammensetzung nach Anspruch 1, wobei R₁ und R₂ beide Cyclohexyl sind.

3. Polyethylen-Zusammensetzung nach einem der vorstehenden Ansprüche, wobei das multimodale Polyethylenpolymer eine Dichte nach ISO 1183 im Bereich von 0,940 - 0,980 g/cm³, bevorzugt im Bereich von 0,945 - 0,970 g/cm³, bevorzugter im Bereich von 0,950 - 0,960 g/cm³ aufweist.

4. Polyethylen-Zusammensetzung nach einem der vorstehenden Ansprüche, wobei das multimodale Polyethylenpolymer einen MFR190/2,16 nach ISO1133 im Bereich von 0,05 bis 20 g/10 min aufweist.

5. Polyethylen-Zusammensetzung nach einem der vorstehenden Ansprüche, wobei das Farbpigment ein makrozyklisches organisches Pigment oder ein oder mehrere anorganische Pigmente oder eine Mischung davon, bevorzugt eine Mischung aus Ultramarinblau und einem Phthalocyanin, umfasst.

6. Polyethylen-Zusammensetzung nach Anspruch 5, wobei das makrozyklische organische Pigment ein Phthalocyanin (Pc) oder ein Derivat davon, bevorzugt Kupferphthalocyanin und/oder ein Derivat davon, umfasst.

7. Polyethylen-Zusammensetzung nach Anspruch 5, wobei das anorganische Pigment aus Ultramarinblau oder Titandioxid oder einer Kombination davon ausgewählt ist.

8. Polyethylen-Zusammensetzung nach einem der vorstehenden Ansprüche, wobei das Polyethylenpolymer bimodal ist und/oder wobei das Polyethylenpolymer eine Molekulargewichtsverteilung Mw/Mn im Bereich von 5 - 50, bevorzugt im Bereich von 10 - 30, wie durch GPC gemessen, aufweist.

9. Polyethylen-Zusammensetzung nach einem der vorstehenden Ansprüche umfassend
a) mindestens 94,0 Gew.-% eines multimodalen Polyethylenpolymers;
b) 0,05 bis 5,0 Gew.-% eines Farbpigments oder eines Farbmasterbatchs, das ein Farbpigment umfasst;
c) 0,01 bis 1,0 Gew.-% des Keimbildners.

10. Verwendung der Zusammensetzung, wie in Anspruch 1 definiert, zur Verringerung von Schwindungsanisotropie und/oder Verzug in einem spritzgegossenen oder formgepressten Artikel.

11. Artikel umfassend die Polyethylen-Zusammensetzung nach einem der Ansprüche 1 bis 9, bevorzugt einen spritzgegossenen oder formgepressten Artikel, bevorzugter eine Kappe oder einen Verschluss.

12. Verwendung der Zusammensetzung, wie in Anspruch 1 definiert, zur Verringerung von High-Tips und/oder Engelshaar in einer spritzgegossenen oder formgepressten Kappe.

13. Verwendung der Zusammensetzung, wie in Anspruch 1 definiert, zur Verringerung der Zykluszeit in einem Herstellungsverfahren einer spritzgegossenen oder formgepressten Kappe.

## Revendications

1. Composition de polyéthylène comprenant
a) au moins 89,0 % en poids d'un polymère de polyéthylène multimodal ;
b) 0,01 à 10,0 % en poids d'un pigment coloré ou d'un mélange maître coloré comprenant un pigment coloré ;
c) 0,01 à 1,0 % en poids d'un agent de nucléation de formule (IV) 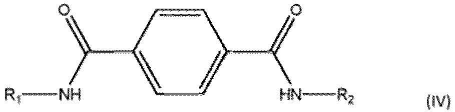
dans laquelle R₁ et R₂ comprennent les mêmes groupes ou des groupes différents choisis parmi cycloalkyle en C3-C12 ; alkyle en C1-C20 ; ou cycloalkyle en C3-C12-alkylène en C1-6 ;
ou l'agent de nucléation N,N'-dicyclohexyl-2,6-naphthylènedicarboxamide.

2. Composition de polyéthylène selon la revendication 1, dans laquelle R₁ et R₂ sont tous deux cyclohexyle.

3. Composition de polyéthylène selon l'une quelconque des revendications précédentes, dans laquelle ledit polymère de polyéthylène multimodal a une densité selon la norme ISO 1183 dans la plage de 0,940 à 0,980 g/cm³, de préférence dans la plage de 0,945 à 0,970 g/cm³, plus préférablement dans la plage de 0,950 à 0,960 g/cm³.

4. Composition de polyéthylène selon l'une quelconque des revendications précédentes, dans laquelle ledit polymère de polyéthylène multimodal a un MFR 190/2,16 selon la norme ISO 1133 dans la plage de 0,05 à 20 g/10 min.

5. Composition de polyéthylène selon l'une quelconque des revendications précédentes, dans laquelle le pigment coloré comprend un pigment organique macrocyclique ou un ou plusieurs pigments inorganiques ou un mélange de ceux-ci, de préférence un mélange de bleu outremer et d'une phtalocyanine.

6. Composition de polyéthylène selon la revendication 5, dans laquelle ledit pigment organique macrocyclique comprend une phtalocyanine (Pc) ou un dérivé de celle-ci, de préférence de la phtalocyanine de cuivre et/ou un dérivé de celle-ci.

7. Composition de polyéthylène selon la revendication 5, dans laquelle le pigment inorganique est choisi parmi le bleu outremer ou le dioxyde de titane ou une combinaison de ceux-ci.

8. Composition de polyéthylène selon l'une quelconque des revendications précédentes, dans laquelle le polymère de polyéthylène est bimodal et/ou dans laquelle le polymère de polyéthylène a une distribution de masses moléculaires Mw/Mn dans la plage de 5 à 50, de préférence dans la plage de 10 à 30 telle que mesurée par GPC.

9. Composition de polyéthylène selon l'une quelconque des revendications précédentes, comprenant
a) au moins 94,0 % en poids d'un polymère de polyéthylène multimodal ;
b) 0,05 à 5,0 % en poids d'un pigment coloré ou d'un mélange maître coloré comprenant un pigment coloré ;
c) 0,01 à 1,0 % en poids dudit agent de nucléation.

10. Utilisation de la composition telle que définie dans la revendication 1 pour réduire l'anisotropie de retrait et/ou le gauchissement dans un article moulé par injection ou moulé par compression.

11. Article comprenant la composition de polyéthylène selon la revendication 1 à 9, de préférence un article moulé par injection ou moulé par compression, plus préférablement un bouchon ou une fermeture.

12. Utilisation de la composition selon la revendication 1 pour réduire les pointes hautes et/ou les cheveux d'ange dans un bouchon moulé par injection ou par compression.

13. Utilisation de la composition selon la revendication 1 pour réduire le temps de cycle dans un procédé de fabrication de bouchon moulé par injection ou par compression.
